# EUROPÄISCHE PATENTSCHRIFT

(11) **EP 2 155 464 B1**
(45) Veröffentlichungstag und Bekanntmachung des Hinweises auf die Patenterteilung: **10.08.2011**
(21) Anmeldenummer: 07821738.7
(22) Anmeldetag: 23.10.2007
(51) Int. Cl.: B29C 45/40

(54) **ENTFORMUNGSVORRICHTUNG ZUM ENTFORMEN EINES WERKSTÜCKS AUS EINEM FORMWERKZEUG**
DEMOLDING DEVICE FOR DEMOLDING A TOOL FROM A MOLD
DISPOSITIF DE DÉMOULAGE DESTINÉ AU DÉMOULAGE D'UNE PIÈCE À USINER HORS D'UN OUTIL DE MOULAGE

(30) Priorität: 17.06.2007 DE 102007028434
(43) Veröffentlichungstag der Anmeldung: 24.02.2010
(73) Patentinhaber: D-M-E Europe CVBA, 2800 Mechelen (BE)
(72) Erfinder: JUNG, Horst, 72358 Dormettingen (DE)
(74) Vertreter: Tarvenkorn, Oliver
(86) Internationale Anmeldenummer: PCT/EP2007/061375
(87) Internationale Veröffentlichungsnummer: WO 2008/154964

(56) Entgegenhaltungen:
- JP-A- 58 197 033
- US-A- 4 726 925
- US-A- 5 470 221
- US-A- 6 086 355

## Beschreibung

Die Erfindung betrifft eine Entformungsvorrichtung zum Entformen eines Werkstücks aus einem Formwerkzeug, welches ein Formoberteil und ein Formunterteil umfasst, welche Formteile entlang einer Hubrichtung gegeneinander bewegbar sind.

Bei herkömmlichen Formwerkzeugen wird das Werkstück zusammen mit dem Formoberteil nach oben abgehoben und dabei vom Formunterteil gelöst. Zum Lösen des Werkstücks vom Formoberteil sind weiterhin ein oder mehrere stiftförmige Auswerfer am Formoberteil vorgesehen, die eine Relativbewegung zwischen Werkstück und Formoberteil erzwingen und dadurch zu der gewünschten Ablösung führen. Nachteilig ist hierbei, dass es im Bereich der Auswerfer durch die Krafteinleitung zu unerwünschten Verformungen der noch warmen Werkstucke kommt. Dies verschlechtert den optischen Eindruck der Werkstücke.

Weiterhin ist es bekannt, seitlich im Bereich der Trennfläche zwischen Formoberteil und Formunterteil mindestens einen, vorzugsweise zwei Niederhalter anzuordnen, die nach einer vorgegebenen Wegstrecke das Werkstück vom Formoberteil ablösen. Um die Werkstücke entnehmen zu können müssen die Niederhalter vom Bedienpersonal aus dem Arbeitsbereich um 90° - 180° herausgeschwenkt und später wieder hinein geschwenkt werden. Wird das Hineinschwenken vergessen, führt dies beim Schließen des Formwerkzeugs zu dessen Beschädigung oder Zerstörung. Des Dokument US-A-5470221 offenbart eine Entformungsvorrichtung gemäβ dem Oberbegriff des Anspruchs 1.

Aufgabe der Erfindung ist es, eine Entformungsvorrichtung zum Entformen eines Werkstücks aus einem Formwerkzeug mit einfachem Aufbau anzugeben.

Diese Aufgabe wird gelöst durch eine Entformungsvorrichtung mit den Merkmalen des Patentanspruchs 1.

Vorteilhafte Ausführungen sind Gegenstand weiterer Ansprüche.

Die Entformungsvorrichtung wird vorzugsweise paarweise an gegenüberliegenden Seiten an ein Formwerkzeug angesetzt, welches ein Formoberteil und einem Formunterteil umfasst, wobei die Formteile entlang einer Hubrichtung gegeneinander bewegbar sind.

Die Bezeichnungen "Formoberteil" und "Formunterteil" werden in einer Vorrichtung im Sinne der vorliegenden Erfindung nur benutzt, um die eine oder die andere Formhälfte eines Gießwerkzeugs unter Bezugnahme auf die Zeichnungen der vorliegenden Erfindungsbeschreibung gezielt ansprechen zu können, ohne dass damit eine Anordnung im Raum zwingend festgelegt wäre. Wenn auch nachfolgend beschrieben wird, dass z.B. der Hubschieber am unteren Formteil festgelegt ist und der Niederhalter am Formoberteil anliegt, so ist die umgekehrte Anordnung ebenso möglich.

Die erfindungsgemäße Entformungsvorrichtung umfasst:
- einen Niederhalter, der im geschlossenen Zustand des Formwerkzeugs wenigstens teilweise zwischen den Formteilen angeordnet ist und sich bis in eine zur Herstellung des Werkstücks vorgesehene Kavität erstreckt, wo er einen Teil einer formgebenden Oberfläche bildet;
- einen Hubschieber, der mit dem Niederhalter verbunden und der mit einem der Formteile, z.B. dem Formunterteil, über eine Führungseinrichtung formschlüssig gekoppelt ist, und
- ein Steuerteil, das z. B. mit dem Formoberteil verbunden ist.

Die Funktion des vorgenannten Werkzeugs ist wie folgt:

Der mit dem einen Formteil gekoppelte Hubschieber ist entlang einer durch die Führungseinrichtung begrenzten ersten Wegstrecke w1 entlang der Hubrichtung verschiebbar. Der damit verbundene Niederhalter kann somit während der Wegstrecke w1 an der anderen Formhälfte anliegend verbleiben. Während der ersten Wegstrecke w1 ist ein Verschwenken des Hubschiebers und/oder des Niederhalters blockiert.

Am Ende der Wegstrecke w1 werden Hubschieber und Niederhalter jedoch in Hubrichtung zurückgehalten, während diejenige Formhälfte, an der der Niederhalter zunächst anlag, weiter über eine zweite Wegstrecke w2 verfahren werden kann. Im Bereich der zweiten Wegstrecke bleiben der Hubschieber und der Niederhalter ortsfest zum Formunterteil, während sich das Formoberteil weiterhin vom Formunterteil weg bewegt. Dadurch wird ein am Formoberteil haftendes Werkstück vom Niederhalter zurückgehalten und abgestreift.

Während der zweiten Wegstrecke w2 kann das Formoberteil seine Bewegung in Hubrichtung fortsetzen, wobei das damit verbundene Steuerteil weiterhin ein Verschwenken des Niederhalters blockiert.

Erst nach der weiteren Wegstrecke w2 wird die Blockade aufgehoben und der Niederhalter kann seitlich wegschwenken, wobei sich bei einer Schwenkbewegung das die Kavität im Formwerkzeug vorher überdeckende Ende des Hubschiebers nach außen weg bewegt. Damit ist der Zugriff auf das Werkstück in der Kavität durch automatische Greifer frei bzw. bei vertikaler Ausrichtung der Trennebene kann das Werkstück nun frei zwischen den voneinander abgehobenen Formteilen herausfallen.

In dem dritten Wegbereich kann sich der Hubschieber mit dem Niederhalter insbesondere mit Hilfe des Federelementes um eine Drehachse quer zur Hubbewegung drehen.

Beim Schließen wird in umgekehrter Reihenfolge zuerst der Hubschieber mit dem Niederhalter durch das erste Steuerteil entgegen der Kraft des Federelementes in die Ausgangsposition zurückgeführt und erst anschließend setzt das Formoberteil auf das Formunterteil auf.

Durch diese erfindungsgemäße Lösung wird das Werkstück beim Öffnen des Formwerkzeuges vollständig vom Formunterteil und vom Formoberteil gelöst und gleichzeitig der Niederhalter weg bewegt. Dies passiert vollautomatisch. Beim Schließen werden die Niederhalter wieder vollautomatisch in die Ausgangslage zurückgebracht, so dass eine Beschädigung sicher verhindert werden kann. Weiterhin ist diese erfindungsgemäße Lösung einfach aufgebaut und kann sehr einfach an alle Ausführungsformen von Formwerkzeugen angepasst werden. Schließlich kann auf Auswerfer vollständig verzichtet werden, was zu einer Kostenersparnis führt.

Die Anordnung eines zum Abspreizen dienenden Federelementes oder anderen Betätigungselements zwischen dem Hubschieber und dem Formunterteil in der Nähe des endseitig mit dem Hubschieber verbundenen Niederhalters hat den Vorteil, dass der Hebelarm zum Lösen des Niederhalters möglichst groß ist.

Der Einsatz einer Aussparung im Formoberteil zur Aufnahme des Niederhalters verhindert eine Beschädigung des Formwerkzeugs beim Schließen.

Durch die Anordnung einer Formschräge in dem dem Formoberteil zugewandten Bereich des Niederhalters wird gewährleistet, dass dieser sich beim Öffnen des Formwerkzeugs nicht mit dem Formoberteil verkeilt, sondern sich leicht aus der Aussparung löst.

Die Anordnung eines zweiten Steuerteils im Bereich unterhalb der Drehachse am Formunterteil, welches beim Schlieβen des Formwerkzeugs ebenfalls eine Drehbewegung des Hubschiebers entgegen der Kraft des Federelementes um die Drehachse verursacht, verbessert die Funktion des Formwerkzeugs und gewährleistet ein sicheres Einrücken des Niederhalters.

Weitere vorteilhafte Einzelheiten von Ausführungsformen der Erfindung ergeben sich aus den Unteransprüchen, der Zeichnung sowie der zugehörigen Beschreibung.

Die Erfindung wird nachstehend beispielhaft anhand einer Zeichnung näher beschrieben, wobei die Prinzipdarstellungen zeigen:
- Fig. 1: ein Ausführungsbeispiel eines Formwerkzeugs mit einer erfindungsgemäßen Entformungsvorrichtung im Querschnitt,
- Fig. 2: das Ausführungsbeispiel gemäß Fig. 1 in einer vereinfachten, perspektivischen Darstellung,
- Fig. 3: eine Entformungsvorrichtung gemäß dem Ausfüh- rungsbeispiel in zwei perspektivischen Ansich- ten,
- Fig. 4: ein erstes Steuerteil gemäß dem Ausführungsbei- spiel in einer vereinfachten perspektivischen Ansicht,
- Fig. 5: einen Hubschieber gemäß dem Ausführungsbeispiel in einer vereinfachten perspektivischen An- sicht,
- Fig. 6: einen Niederhalter gemäß dem Ausführungsbei- spiel in einer vereinfachten perspektivischen Ansicht,
- Fig. 7: ein zweites Steuerteil gemäß dem Ausführungs- beispiel in einer vereinfachten perspektivi- schen Ansicht,
- Fig. 8: ein Formoberteil gemäß dem Ausführungsbeispiel in einer vereinfachten perspektivischen Ansicht von unten;
- Fig. 9 bis 12: jeweils ein Formwerkzeug mit Entformungs- vorrichtung in verschiedenen Bewegungsstadien, jeweils in perspektivischer Darstellung;
- Fig. 13: eine zweite, kompakte Ausführungsform einer er- findungsgemäßen Entformungsvorrichtung und
- Fig. 14 bis Fig. 16: verschiedene Bewegungsstadien der zweiten Ausführungsform, jeweils in perspekti- vischer Darstellung.

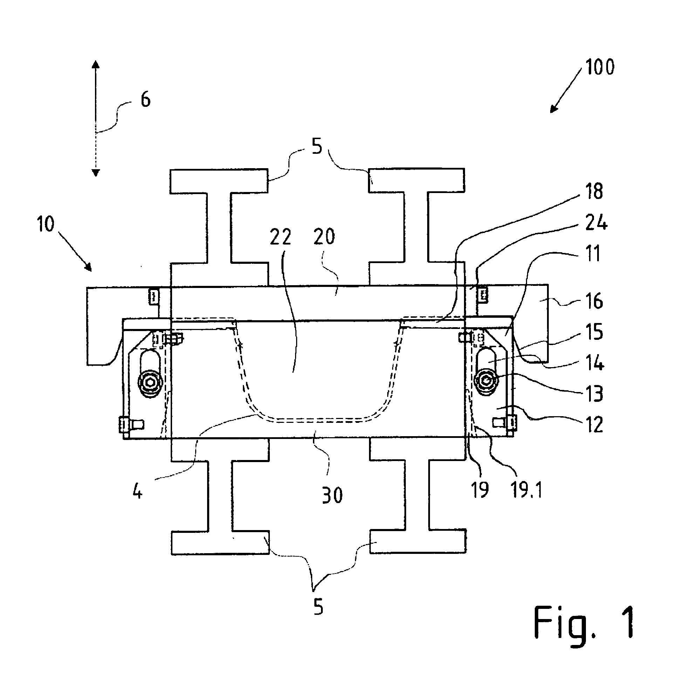

Das in Fig. 1 insgesamt mit 100 bezeichnete Formwerkzeug weist ein Formoberteil 20 und ein Formunterteil 30 auf, die zusammen eine Form zur Herstellung eines Werkstückes 4, insbesondere aus Kunststoff, ausbilden. Im dargestellten Ausführungsbeispiel handelt es sich um ein wannenförmiges Werkstück 4. Das Formoberteil 20 und das Formunterteil 30 sind hier jeweils mit zwei Trägern 5 verbunden, mit deren Hilfe die beiden Teile 20, 30 in bekannter Art und Weise in einer Hubrichtung 6 relativ zueinander bewegt werden können.

Auf gegenüberliegenden Seiten des Formwerkzeugs 100 ist jeweils eine Entformungsvorrichtung 10 zum Entformen des Werkstücks 4 aus dem Formwerkzeug 100 vorgesehen.

Bei der an sich bekannten Herstellung eines Werkstücks durch Spritzgießen wird das Formwerkzeug 100 zunächst geschlossen, so dass Formober- und -unterteil 20, 30 aneinanderliegen und ein geeigneter Werkstoff, beispielsweise Polyurethan, in die durch Ausnehmungen in den Formteilen 20, 30 gebildete Kavität eingespritzt wird. Nach dem zumindest teilweise Aushärten wird das Formwerkzeug 100 geöffnet und das Werkstück 4 sowohl vom Formunterteil 30 als auch vom Formoberteil 20 gelöst und abschließend entnommen. Üblicherweise ist das Formwerkzeug 100 so ausgestaltet, dass das Werkstück 4 beim Öffnen des Formwerkzeugs 100 am Formoberteil 20 hängen bleibt und somit beim Auseinanderfahren der Formteile 20, 30 in Richtung 6 vom Formunterteil 30 gelöst wird. Hierzu können beispielsweise nicht dargestellte Hinterschneidungen am Formoberteil 20 vorgesehen werden, die das Werkstück 4 zunächst am Formoberteil 20 festklemmen und ein Herausziehen aus dem Formunterteil 30 erlauben.

Erfindungsgemäß ist zum Lösen des Werkstückes 4 vom Formoberteil 20 auf gegenüberliegenden Seiten des Formwerkzeugs 100 je eine Entformungsvorrichtung 10 vorgesehen.

Das Formwerkzeug 100 ist gemäß diesem Ausführungsbeispiel quaderförmig, wobei an den beiden Langseiten jeweils eine Entformungsvorrichtung 10 angeordnet ist. Die Anzahl an Entformungsvorrichtungen 10 ist ebenfalls variabel, wobei im Allgemeinen zumindest zwei Entformungsvorrichtungen 10 für einen sicheren Betrieb notwendig sein werden.

Auch die Anordnung der Entformungsvorrichtungen 10 ist nicht auf die dargestellte Position beschränkt, sondern kann abhängig vom herzustellenden Werkstück 4 gewählt werden.

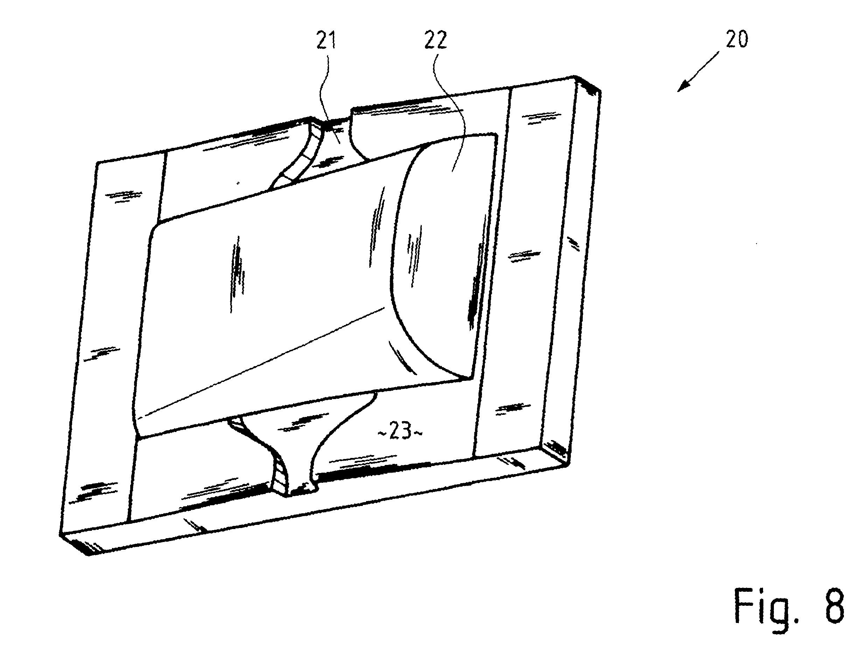

Kernstück der erfindungsgemäßen Entformungsvorrichtung 10 ist ein Niederhalter 18, der im geschlossenen Zustand zwischen den Formteilen 20, 30 angeordnet ist. Dabei ist in wenigstens einem Formteil 20 oder 30 eine Vertiefung 21 zur vollständige Aufnahme des Niederhalters vorgesehen ist, wie Fig. 8 zeigt. Die zwischen den Formteilen 20, 30 liegenden Bereiche des Niederhalters 18 werden mit wenigstens einer Oberfläche Teil des formgebenden Werkzeugs 100.

Die Entformungsvorrichtsung 10 weist wenigstens
- ein Führungsteil 12,
- einen Hubschieber 11,
- ein in den Figuren nicht näher dargestelltes Betätigungselement, insbesondere Federelement,
- den Niederhalter 18 und
- ein erstes Steuerteil 16
auf.

Das Führungsteil 12 ist im dargestellten Ausführungsbeispiel mit dem Formunterteil 30 verbunden; eine umgekehrte Anordnung ist jedoch möglich.

Der Hubschieber 11 ist hier lösbar mit dem Niederhalter 18 verbunden, wodurch der Niederhalter leichter an die Formteile 20, 30 angepasst werden kann. Auch kann durch Austausch des Niederhalters 18 die übrige Entformungsvorrichtung 10 auf andere Formwerkzeuge 100 übertragen werden, so dass nur die in die Kavität eingreifenden Teilbereiche des Niederhalters individuell angepasst werden müssen.

Alternativ können der Hubschieber 11 und der Niederhalter 18 auch einstückig ausgeführt oder aus mehr als zwei Teilen zusammengesetzt sein.

Der Hubschieber 11 und das Führungsteil 12 wirken derart zusammen, dass der Hubschieber 11 um eine erste vorgegebene Wegstrecke entlang der Hubrichtung 6 gegenüber den Führungsteilen 12 verschiebbar und gleichzeitig um eine quer zur Hubrichtung 6 verlaufende Drehachse 13 Schwenkbar ist.

Die Verschiebung wird auf einfache Weise dadurch ermöglicht, dass das Führungsteil 12 eine Führung, beispielsweise in Form einer quaderförmigen Aussparung, für den im Beispiel quaderförmig ausgebildeten Hubschieber 11 aufweist. Selbstverständlich sind auch andere Querschnittsformen oder andere Führungsalternativen möglich.

Die Führungsteile 12 weisen ergänzend jeweils in Hubrichtung 6 verlaufende Ausnehmungen 14 auf. In diese Ausnehmungen 14 greift die Drehachse 13 ein. Damit erfüllt die im Hubschieber 11 gelagerte Drehachse 13 bei dem dargestellten Ausführungsbeispiel der Erfindung mehrere Funktionen zugleich:
- Zunächst dient sie als Schiebeelement in einer Führungsbahn, die durch die Ausnehmungen 14 gebildet ist und führt den Weg des Hubschiebers 11.
- Dann dient die Drehachse 13, wenn sie am Ende der Ausnehmungen 14 angekommen ist, als Festanschlag und Koppelglied, um den Hubschieber mit Niederhalter 18 am Formunterteil 30 zurückzuhalten.
- Schließlich dient sie dann der Schwenkbarkeit des Hubschiebers 11.

Die Drehbewegung des Hubschiebers 11 um die Drehachse 13 wird beim ersten Ausführungsbeispiel durch ein nicht dargestelltes Betätigungselement, insbesondere eine Druckfeder, verursacht, welches vorzugsweise benachbart zum Niederhalter 18 zwischen dem Hubschieber 11 und dem Formunterteil 30 angeordnet ist. Durch diese Anordnung werden der Hebelarm und damit das Moment für die Schwenkbewegung vergrößert. Es ist jedoch auch möglich, das Federelement an einer anderen Stelle anzuordnen, solange dieselbe Bewegung dadurch ermöglicht wird.

Neben herkömmlichen Spiralfedern können auch andere, beispielsweise mechanische, pneumatische oder hydraulische Aktoren als Betätigungselemente eingesetzt werden.

Der mit dem Hubschieber 11 verbundene Niederhalter 18 erstreckt sich im geschlossenen Zustand des Formwerkzeugs 100 im Bereich zwischen dem Formunterteil 30 und dem Formoberteil 20 bis in den Bereich des herzustellenden Werkstücks 4. Beim Öffnen des Formwerkzeugs 100 löst der Niederhalter 18 das Werkstück 4 vom Formoberteil 20. Im vollständig geöffneten Zustand des Formwerkzeugs 100 gibt der Niederhalter das Werkstück frei und ermöglicht so die Entnahme des Werkstückes 4 aus dem Formwerkzeug 100.

Das erste Steuerteil 16 ist mit dem Formoberteil 20 verbunden und weist eine Steuerkante 15 mit zwei Bereichen 15a, 15b auf, wobei der eine, dem Formunterteil 30 zugewandte Bereich 15b der Steuerkante 15 beim Schließen des Formwerkzeugs 100 eine Drehbewegung des Hubschiebers 11 entgegen der Kraft des Federelementes um die Drehachse 13 in Richtung des Formunterteils 30 verursacht, und wobei der andere, dem Formoberteil 20 zugewandte Bereich 15b der Steuerkante 15 eine translatorische Bewegung des ersten Steuerteils 16 relativ zum Hubschieber 11 im wesentlichen entlang der Hubrichtung 6 ermöglicht.

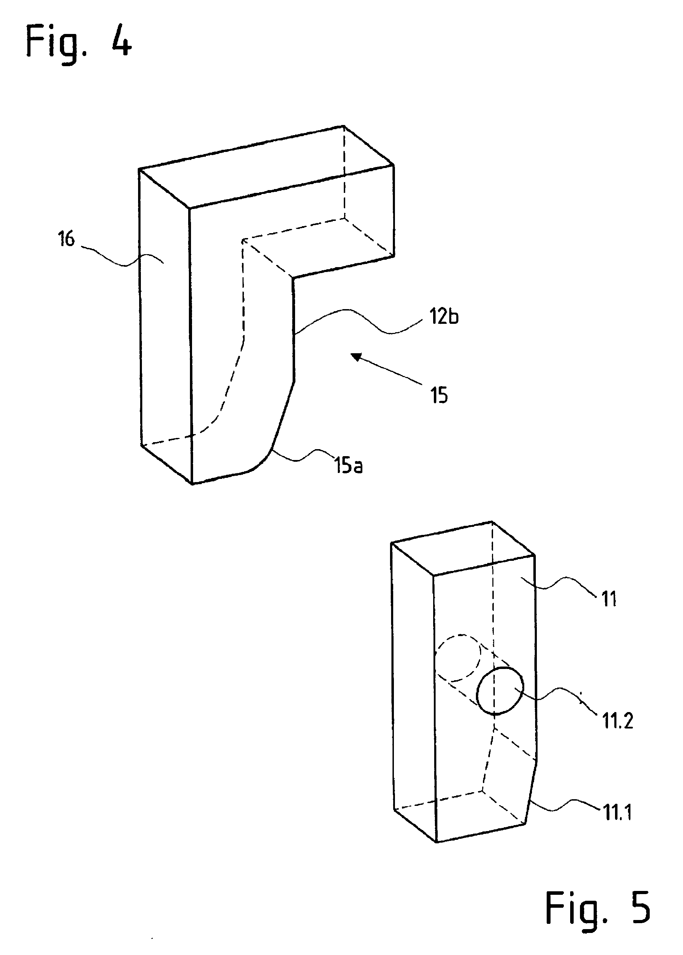

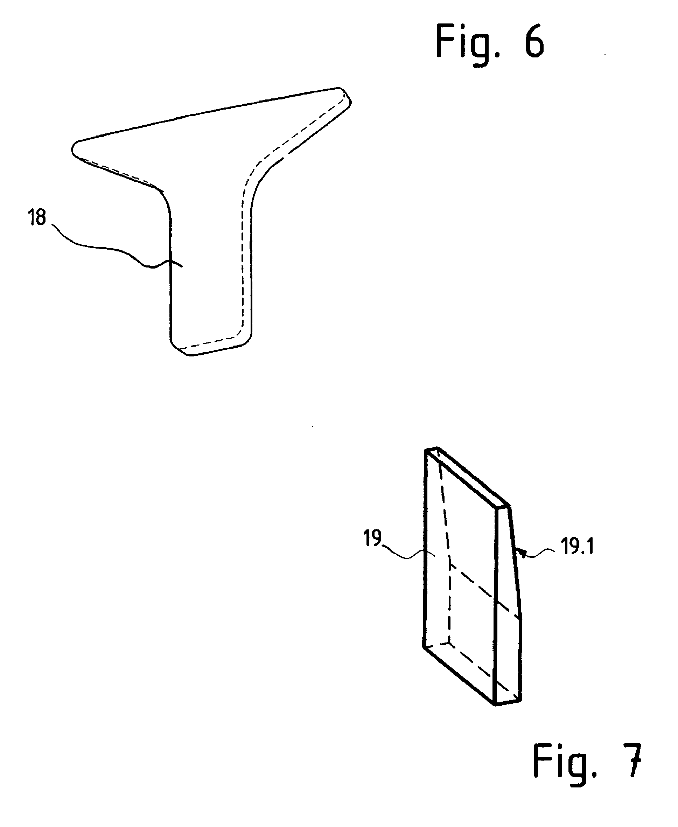

Zur Unterstutzung der Drehbewegung des Hubschiebers 11 in die Ausgangsposition zurück kann, wie im Ausführungsbeispiel dargestellt, zusätzlich ein zweites Steuerteil 19 am Formunterteil 30 angeordnet werden, welches mit seiner Schräge 19.1 mit einer entsprechenden Schräge am Hubschieber 11 zusammenwirkt (siehe weiter unten bei Fig. 5 und 7) .

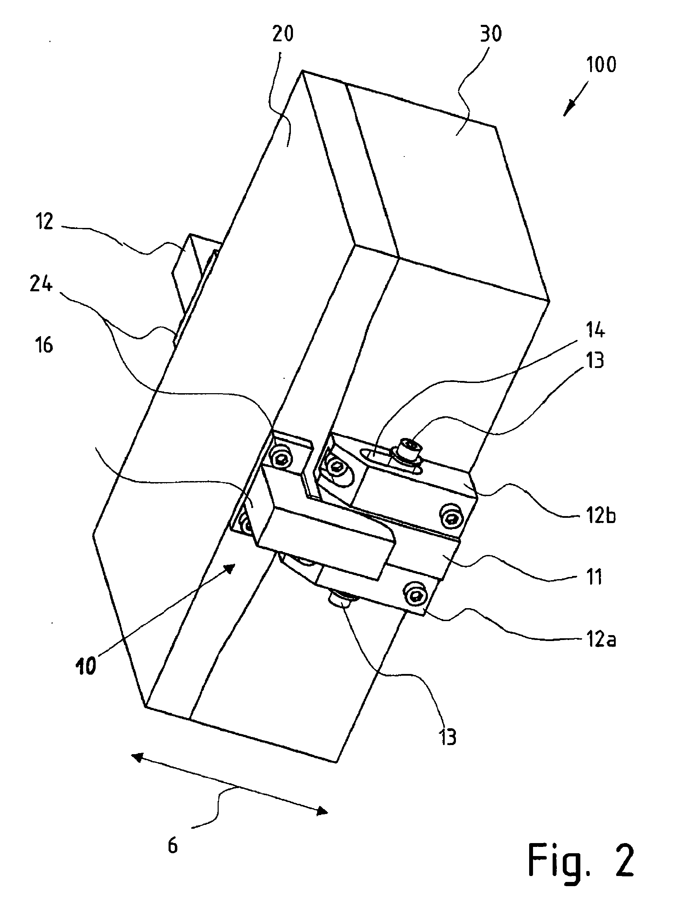

In Fig. 2 sind die Träger 5 und die gesamte Einrichtung zur Bewegung des Formoberteils 20 relativ zum Formunterteil 30 entlang der Hubrichtung 6 nicht dargestellt, da deren Art und Anordnung für die Erfindung nicht wesentlich sind.

Das erste Steuerteil 16 ist im dargestellten Ausführungsbeispiel mit Hilfe einer Halteplatte 24 und zwei Schrauben am Formoberteil 20 befestigt. Alternativ können das erste Steuerteil 16 und die Halteplatte 24 auch einstückig ausgeführt oder auch integraler Bestandteil des Formoberteils 20 sein.

Im Ausführungsbeispiel sind am Führungsteil 12 zwei einzelne, quer zur Hubrichtung 6 beabstandete Führungsteile 12a, 12b vorgesehen, die jeweils mit zwei Schrauben am Formunterteil 30 befestigt sind und zwischen welchen der Hubschieber 11 in Hubrichtung 6 geführt ist. Durch die spiegelsymmetrische Anordnung wird einem Verkanten der zueinander beweglichen Teile entgegen gewirkt.

Beide Führungsteile 12a, 12b weisen jeweils einen Schlitz 14 auf, beispielsweise in Form von Langlöchern. In den korrespondierenden Schlitzen 14 ist die mit dem Hubschieber 11 verbundene Drehachse 13 geführt, wobei die relative Hubbewegung des Hubschiebers 11 beziehungsweise des daran angeordneten Niederhalters 18 zum Formunterteil 30 auf eine durch den Schlitz 14 definierte erste vorgegebene Wegstrecke w1 begrenzt ist. Mit anderen Worten definiert die Erstreckung der Ausnehmungen 14 in Hubrichtung 6 den Weg, den das Werkstück 4 zusammen mit dem Formoberteil 20 weg vom Formunterteil 30 zurücklegen kann, bis der beziehungsweise die Niederhalter 18 das Werkstück 4 vom Formoberteil 20 ablösen.

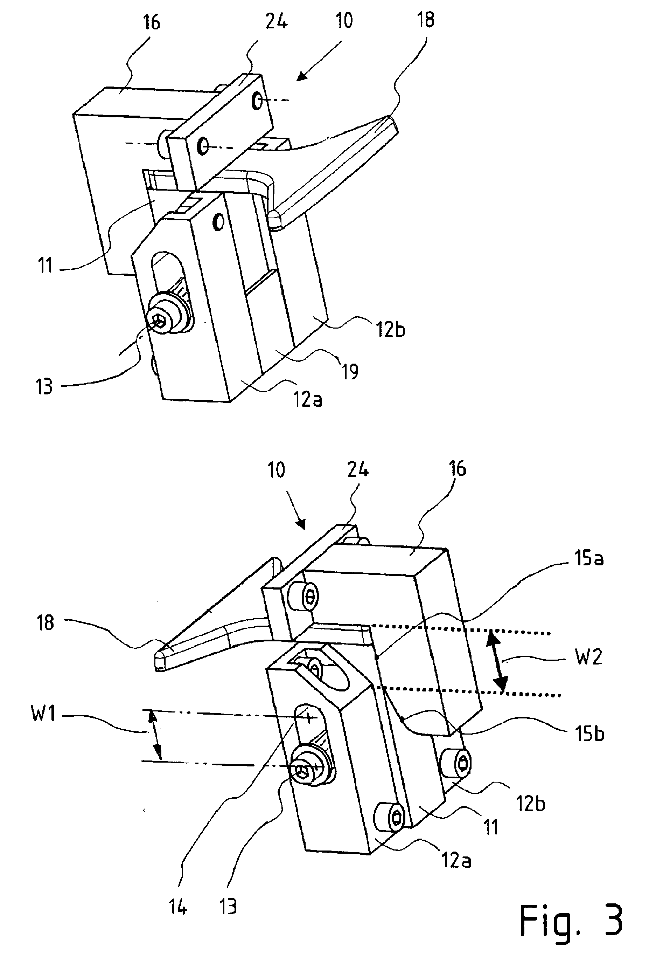

In der Darstellung in Fig. 3 ist zusätzlich auch noch das Formwerkzeug 100 selbst weggelassen, so dass jeweils nur Entformungsvorrichtungen 10 in einer perspektivischen Ansicht von schräg vorne und von schräg hinten gezeigt sind, so wie die Entformungsvorrichtungen 10 an einem Formwerkzeug bevorzugt anzuordnen sind. Dabei ist zu erkennen, dass die beiden im Wesentlichen quaderförmigen Steuerteile 12a, 12b durch ein Verbindungsteil 12c beabstandet sind, so dass sich dazwischen eine rechteckförmige Führung ergibt. Selbstverständlich kann diese Führung auch eine andere Querschnittsform aufweisen. Auch die Art der Befestigung ist den Anforderungen anzupassen.

Das zweite Steuerteil 19 ist nicht so hoch wie die Führungsteile 12, so dass im oberen Teil eine Aussparung ausgebildet ist. Im Bereich dieser Aussparung kann das Federelement, oder ein anderes Betätigungselement, zwischen dem Hubschieber 11 und dem Formunterteil 30 montiert werden, so dass sich das Federelement direkt am Formunterteil 30 abstützt. Alternativ kann sich das Federelement aber auch am Führungsteil 12 abstützten, welches wiederum ortsfest zum Formunterteil 30 angeordnet ist.

In Fig. 4 sind nochmals die Steuerkante 15 mit den Bereichen 15a, 15b als wesentliche Merkmale des ersten Steuerteils 16 dargestellt. Dabei definiert der Bereich 15a den Hub der Hubbewegung und damit, wie weit das Formoberteil 20 aus dem Werkstück heraus gefahren wird, bevor durch den Bereich 15b die Drehbewegung des Hubschiebers 11 und damit ein vollständiges Freigeben des Werkstückes 4 ermöglicht wird.

In Fig. 5 ist nochmals der Hubschieber 11 mit einer Bohrung 21 zur Aufnahme der Drehachse 13, sowie einer am unteren, dem Formunterteil 30 zugewandten Ende des Hubschiebers 11 angeordneten Schräge 20 dargestellt Die Schräge 20 unterstützt im Zusammenspiel mit einer korrespondierenden Schräge 17.1 am zweiten Steuerteil 17 das Zurückdrehen des Hubschiebers 11 und des Niederhalters 18 beim Schließen des Formwerkzeuges 100 in deren Ausgangsposition. Diese Schräge kann selbstverständlich analog zum Bereich 15b der Steuerkante 15 auch eine von einer planen Fläche abweichende Kontur aufweisen.

In Fig. 6 ist nochmals der Niederhalter 18 mit seiner am gesamten, dem Formoberteil 20 zugewandten Rand angeordneten Formschräge 18 einzeln dargestellt. Diese Verjüngung dient dazu, ein Verklemmen des Niederhalters 18 in einer Aussparung 23 im Formoberteil 20 zu vermeiden.

In Fig. 7 ist nochmals das zweite Steuerteil 19 mit seiner zur Schräge am Hubschieber 11 korrespondierenden Schräge 19.1 gezeigt. Dieses zweite Steuerteil 19 kann vorzugsweise als Ergänzung zum ersten Steuerteil 16 für die Drehbewegung des Hubschiebers 11 eingesetzt werden.

In Fig. 8 ist schließlich nochmals das Formoberteil 20 in einer Ansicht von unten dargestellt. Darin sind die beiden Aussparungen 21 für die beiden Niederhalter 18 zu erkennen. Außerdem ist zu erkennen, dass das Formoberteil 20 einen Kern 22 aufweist, welcher in das Formunterteil 30 hinein ragt. Weiterhin ist zu erkennen, dass der Niederhalter 18 später teilweise am Kern 22 anliegt, so dass nach der Herstellung des Werkstückes 4 der Niederhalter 18 in diesem Bereich in Hubrichtung 6 zwischen dem Formoberteil 20 und dem Formunterteil 30 angeordnet ist.

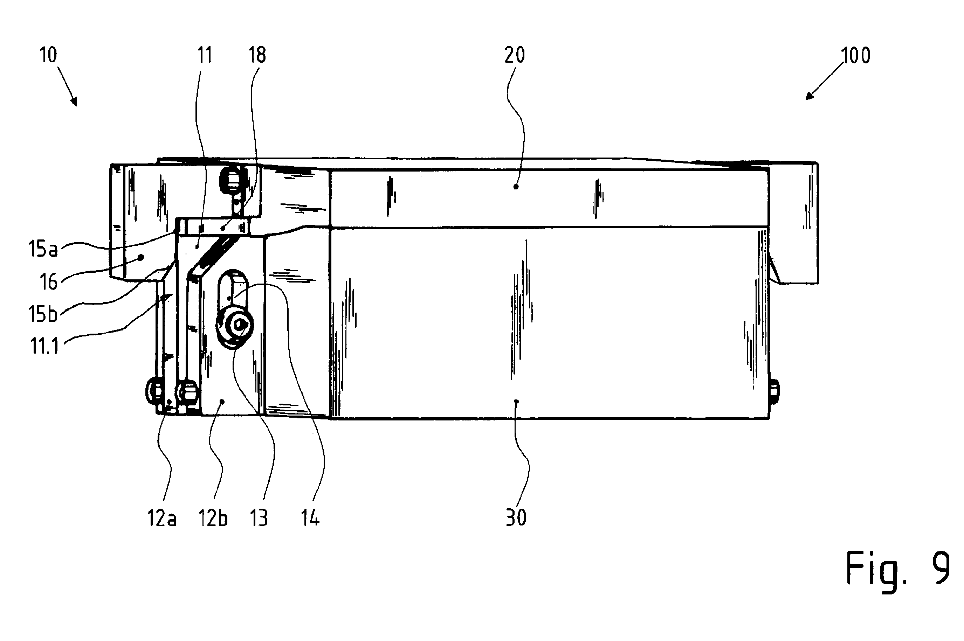

Die Bewegungsabläufe und die Funktionsweise des erfindungsgemäßen Formwerkzeugs 100 werden anschließend mit Bezug auf die Figuren 9 bis 12, die das Formwerkzeug jeweils aus derselben perspektivischen Blickrichtung in verschiedenen Stadien zeigen, erläutert.

In Fig. 9 ist, wie auch in Fig. 1 und 2, das Formwerkzeug 100 mit zwei Entformungsvorrichtungen 10 in vollständig geschlossener Position dargestellt. In dieser Position wird der Hubschieber 11 durch den Steuerbereich 15b des ersten Steuerteils 16 entgegen der Kraft des Federelementes in einer im Wesentlichen parallelen Position zur Hubrichtung 6 und damit der Niederhalter 18 in einer im Wesentlichen parallelen Position zur Trennfläche zwischen dem Formoberteil 20 und dem Formunterteil 30 gehalten.

Wird nun das Formwerkzeug 100 geöffnet und dabei das Formoberteil 20 entlang der Hubrichtung 6 nach oben bewegt, so bewegen sich gleichzeitig mit nach oben:
- das erste Steuerteil 16, weil dieses am Formoberteil 20 festgelegt ist,
- der Niederhalter 18, weil dieser zwischen dem Formoberteil 20 und dem daran haftenden Werkstück 4 "eingeklemmt" ist,
- der Hubschieber 11, weil dieser mit dem Niederhalter 18 verbunden ist, und
- die Drehachse 13, weil diese wiederum mit dem Hubschieber 11 verbunden ist.

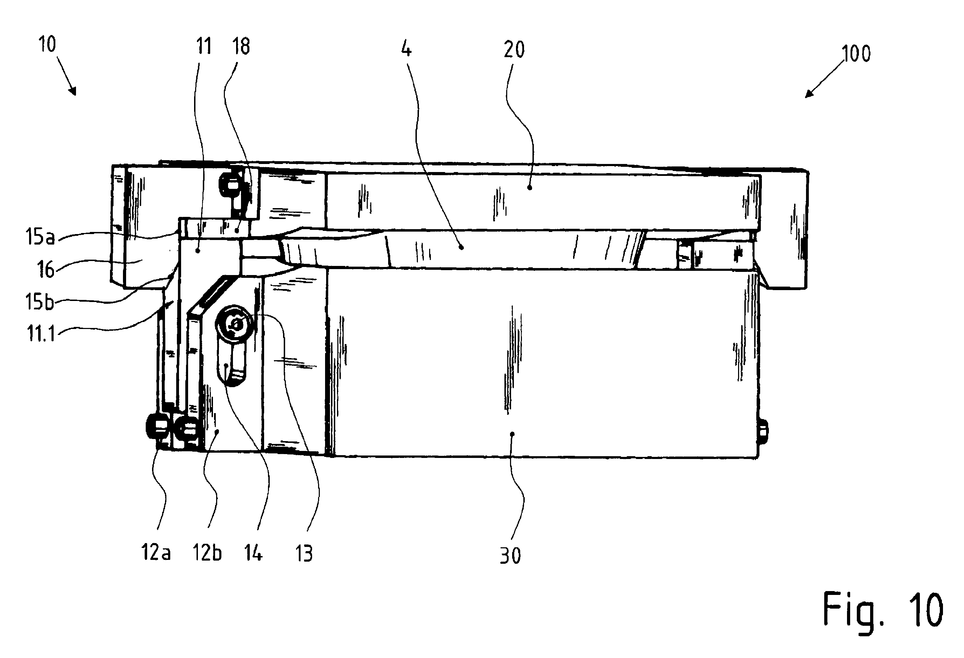

Es wird der in Fig. 10 gezeigte Zustand erreicht. Die Formhälften 20, 30 sind darin leicht voneinander entfernt. Das Werkstück 4 ist bereits sichtbar. In dieser ersten Phase des Öffnungsvorgangs des Formwerkzeugs 100 bleibt das erste Steuerelement 16 nahezu ortsfest zum Hubschieber 11, wobei auch der Bereich 15a der Steuerkante 15 vor der Führungsfläche 11.1 am Hubschieber 11 positioniert bleibt oder sogar an dieser anliegt, so dass eine Schwenkbewegung des Hubschiebers 11 nicht möglich ist.

Wurde das Formoberteil 20 um die erste Wegstrecke w1 (vgl. Fig. 1), welche im wesentlichen durch den Bohrungsabstand in Hubrichtung 6 im Schlitz 14 definiert ist, nach oben bewegt, so kommt die Drehachse 13 am oberen Ende des Schlitzes 14 zum Anschlag und fixiert dadurch den Hubschieber 11 und den Niederhalter 18 in Hubrichtung 6 relativ zum Formunterteil 3.

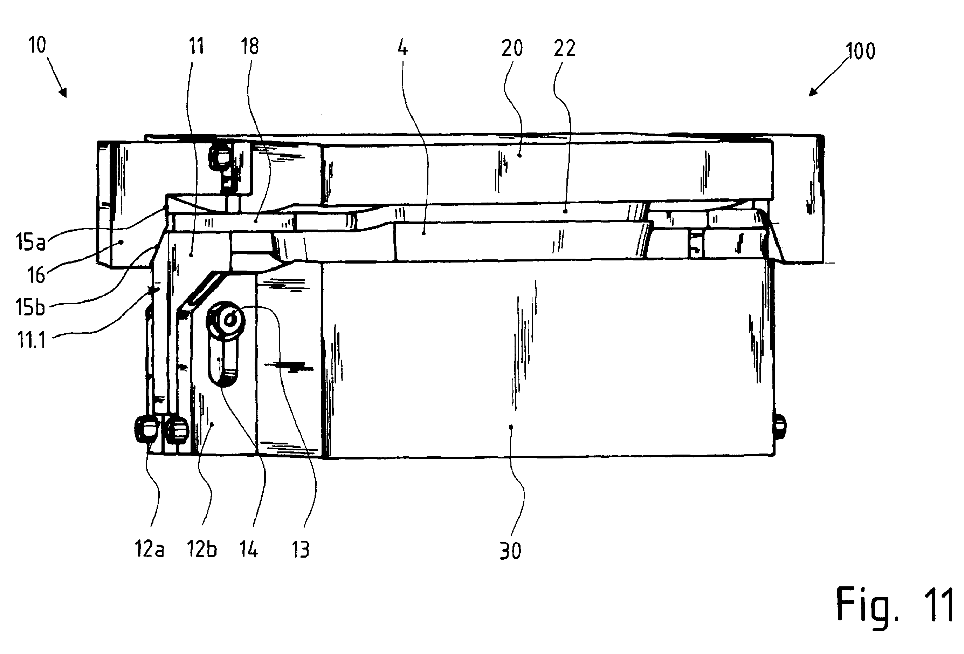

Somit kommt es wegen des formschlüssigen Anschlags der Drehachse 13 am oberen Ende ihrer Führungsbahn, die hier durch den Schlitz 14 gebildet ist, und dem über den Hubschieber 11 mit der Drehachse 13 verbundenen Niederhalter 18 bei der folgenden Aufwärtsbewegung des Formoberteils 20 zu einer Relativbewegung zwischen dem Formoberteil 20 und dem Niederhalter 18 in Hubrichtung 6, wodurch das Werkstück 4 vom Kern 22 des Formoberteils 20 gelöst wird. Dieser Zustand ist in Fig. 11 gezeigt.

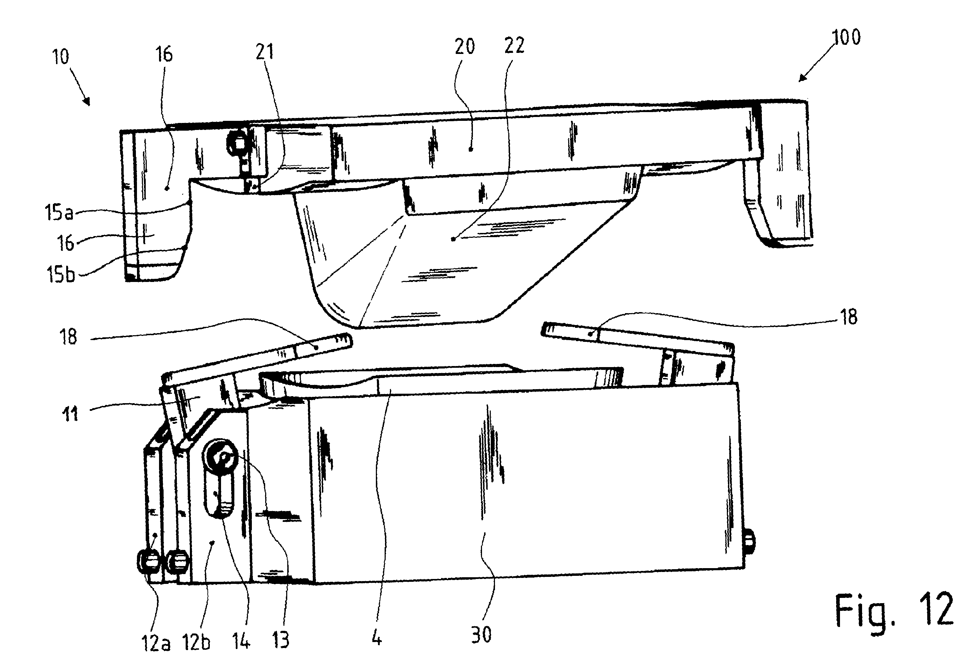

Bei der noch weiteren Bewegung des Formoberteils 20 in Hubrichtung 6 im Bereich einer zweiten vorgegebenen Wegstrecke w2 kommt es jetzt zu einer Relativbewegung in Hubrichtung 6 zwischen dem ersten Steuerteil 16 und dem Hubschieber 11. Die zweite Wegstrecke w2 ist im Wesentlichen durch die Erstreckung des Bereichs 15a in Hubrichtung 6 am ersten Steuerteil 16 definiert. Solange der gerade obere Bereich 15a der Steuerkante 15 an der Gleitfläche 11.1 am Hubschieber anliegt ist nur eine translatorische Bewegung in Hubrichtung 6 möglich, während eine Drehbewegung des Hubschiebers 11 weiterhin verhindert wird. Fig. 12 zeigt den Zustand kurz nachdem der Bereich 15a der Steuerkante 15 die Gleitfläche 11.1 nicht mehr kontaktiert und stattdessen der zurück springende Bereich 15b gegenüber dem Hubschieber liegt.

Erst wenn das Formoberteil 30 mit dem ersten Steuerteil 16 über den zweiten Wegbereich w2 hinaus nach oben bewegt wird, erlaubt der zurückspringende, unter einem Winkel zum ersten Bereich 15a verlaufende Bereich 15b eine durch die Kraft des Betätigungselements verursachte Drehbewegung des Hubschiebers 11 vom Formunterteil 30 weg. Dabei bestimmt die geometrische Form des Bereichs 15b die Amplitude und die Winkelgeschwindigkeit der Schwenkbewegung.

Durch die Schwenkbewegung wird aber auch der Niederhalter 18, welcher mit dem Hubschieber 11 verbunden ist, vom Formunterteil 30 weg bewegt, so dass das Werkstück 4 vollständig freigegeben wird und aus dem Formwerkzeug 100 entnommen werden kann. Hierbei kann die Entformungvorrichtung 10 so dimensioniert sein, dass das zweite Steuerteil 16 jederzeit als Anschlag für die Drehbewegung des Hubschiebers 11 dient. Alternativ kann aber auch das zweite Steuerteil 16 soweit nach oben bewegt werden, dass der Hubschieber 11 nicht mehr an der Steuerkante 15 anliegt. In diesem Fall dient das Formunterteil 20 beziehungsweise das Führungsteil 12 auf der unteren Seite des Hubschiebers 11 als Anschlag zur Begrenzung der Drehbewegung.

Beim Schließen der Vorrichtung 10 (nach der Entnahme des Werkstückes) wird dann durch die Abwärtsbewegung des Formoberteils 20 der Hubschieber 11 entgegen der Kraft des Federelementes durch den Bereich 15b der Steuerkante 15 in Richtung des Formunterteils 30 zurückgedreht und dadurch der Niederhalter 18 in seine Ausgangsposition zurückgeführt. Anschließend bewegt sich das Formoberteil 20 um die zweite Wegstrecke w2 nach unten, bis das erste Steuerteil 16 am Niederhalter 18 zur Anlage kommt und den Niederhalter und den Hubschieber 11 entlang der Hubrichtung 6 zurück in die Ausgangslage bringt.

Somit definiert die durch die Ausnehmungen 14 definierte erste Wegstrecke w1 die Höhe, um die das Formoberteil 20 mit dem Werkstück 4 aus dem Formunterteil 20 herausgehoben wird, bevor mit Hilfe des Niederhalters 18 das Werkstück 4 vom Formoberteil 20 gelöst wird. Durch die Länge der zweiten Wegstrecke w2 wird die Höhe definiert, um welche das Formoberteil 20 aus dem Werkstück 4 herausgehoben wird, bevor der Niederhalter 18 gelöst und das Werkstück 4 zur Entnahme vollständig freigegeben wird. Dadurch kann die Vorrichtung 10 variabel an die Dimension des oberen Formteils 20 in Hubrichtung 6 angepasst werden. Durch die Form des Bereichs 15b wird zusätzlich die Drehbewegung des Niederhalters 18 gesteuert.

Aus dieser Beschreibung der Funktionsweise wird deutlich, dass es für die Erfindung nicht auf die konkrete Ausgestaltung der Einzelteile und der Funktionsflächen ankommt. Vielmehr kommt es auf das Zusammenwirken entsprechender Teile an, so dass die Funktionsflächen zueinander korrespondieren müssen. Im Ausführungsbeispiel, welches dem in der Praxis wahrscheinlich häufigsten Fall entspricht, führen das Formoberteil 20 und das Formunterteil 30 eine einfache lineare Bewegung durch, wobei sich die Hubrichtung 6 senkrecht zu der Trennfläche zwischen Formoberteil 20 und Formunterteil 30 erstreckt. Auch die Einzelteile und Funktionsflächen verlaufen alle im Wesentlichen parallel oder senkrecht zur Hubrichtung 6. Lediglich der Bereich 15b der Steuerkante 15 weist einen von der senkrechten beziehungsweise parallelen Anordnung abweichenden Verlauf auf.

Wesentlich für die Erfindung ist die Gewährleistung der folgenden Teilschritte:
- Relativbewegung von Formoberteil 20, Werkstück 4 und Niederhalter 11 zum Formunterteil 30 in Hubrichtung 6, um das Werkstück 4 vom Formunterteil 30 zu lösen,
- Relativbewegung vom Formoberteil 20 zu Niederhalter 11 in Hubrichtung 6, um das Werkstuck 4 vom Formoberteil zu lösen und das Formoberteil weitgehend oder vollständig aus dem Werkstück herauszuziehen,
- Relativbewegung zwischen Werkstück 4 und Niederhalter 18 quer zur Hubrichtung 6, um das Werkstück 4 vollständig freizugeben.

Besonders vorteilhaft ist die Tatsache, dass das erfindungsgemäße Prinzip sehr einfach an unterschiedliche Formwerkzeuge 100 und Werkstücke 4 anzupassen ist. Variabel sind insbesondere Länge und Lage der Ausnehmungen 14, Lage der Drehachse 13, Länge und Form der Steuerkante 15, sowie Länge und Form des Niederhalters 18. Insbesondere der Niederhalter 18 muss an seinem dem Werkstück 4 zugewandten Ende der Form des Werkstückes 4 angepasst sein, weil dieses Ende einen Teil des Formwerkzeugs 100 bildet und damit Einfluss auf die Kontur des Werkstückes hat.

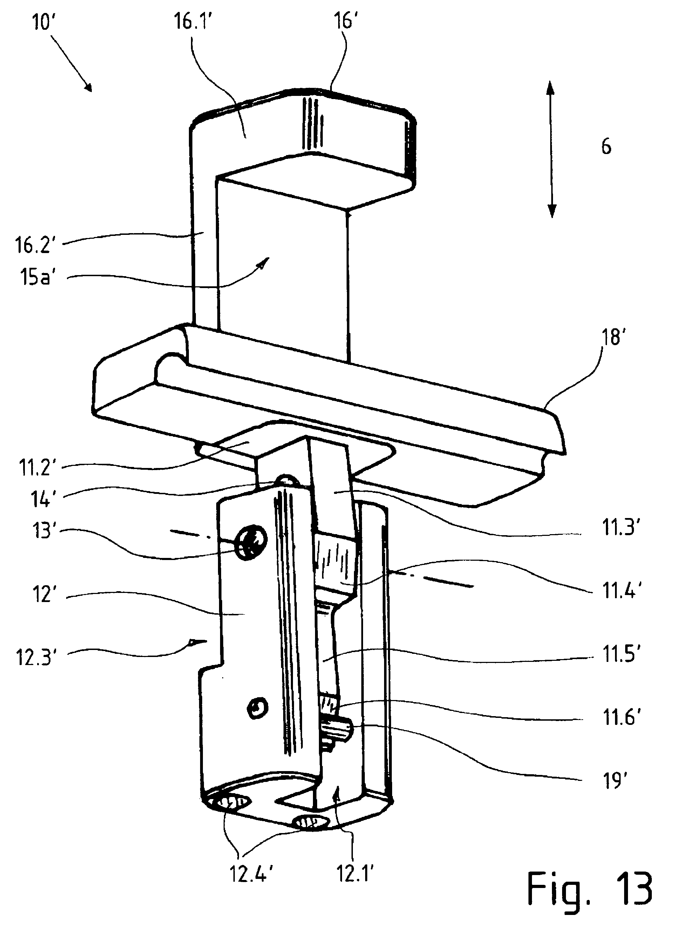

Fig. 13 zeigt eine zweite Ausführungsform einer Entformungsvorrichtung 10', die grundsätzlich die gleiche Funktionsweise wie die zuerst beschriebene Ausführungsform besitzt, jedoch wesentlich kompakter aufgebaut ist, sodass die Entformungsvorrichtung 10' insbesondere auch innerhalb der Trennfläche zwischen den Formteilen eines Werkzeugs angeordnet werden kann und nicht seitlich an dessen Außenkanten angeordnet werden braucht. Somit kann eine solche Ausführungsform auch bei Mehrfach-Spritzgießwerkzeugen eingesetzt werden. Die Entformungsvorrichtungen 10' können in den Zwischenräumen zwischen den einzelnen Kavitäten können angeordnet werden, insbesondere wieder paarweise an gegenüberliegenden Seiten jeder Kavität.

In Fig. 13 ist eine einzelne Entformungsvorrichtung 10' abgebildet. Ein erstes Steuerelement 16' ist im Kopfbereich 16.1' quaderförmig ausgebildet, mit gerundeten Ecken, sodass im Formoberteil eine entsprechende Tasche zur Aufnahme des quaderförmigen Abschnitts leicht durch einen Fräser herstellbar ist.

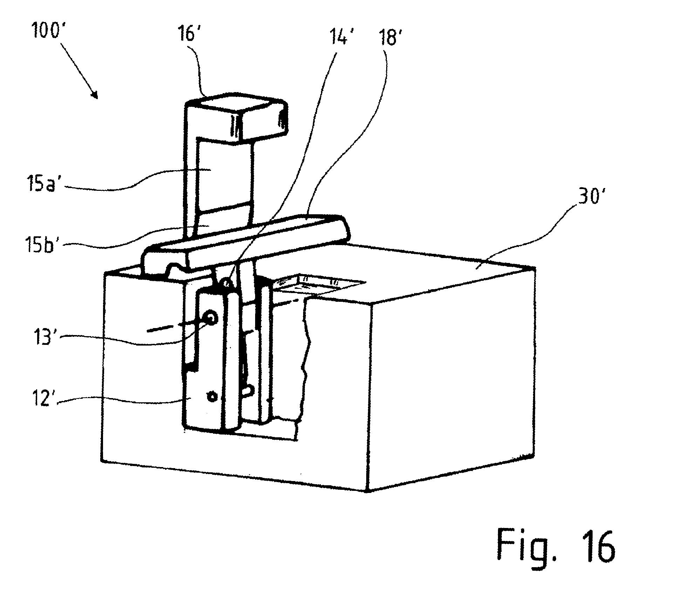

An den Kopfbereich 16.1' schließt sich ein Keilbereich 16.2' an, der wiederum einen ersten Bereich 15a' einer Steuerkante 15' aufweist, welche parallel zur Hubrichtung 6 ist, und eine weitere rückspringende, insbesondere schräg gestellte Bereich 15b', der in Fig. 16 erkennbar ist. Bei der perspektivischen Blickrichtung gemäß Fig. 13 von schräg unten ist weiterhin erkennbar, dass ein Hubschieber 11' ebenfalls einen Kopfbereich 11.2' aufweist. In einem Niederhalter 18', der hier länglich ausgebildet ist, ist an der Unterseite eine entsprechende Tasche eingefräst, in welcher der Kopfbereich 11.2' aufgenommen ist.

Der Hubschieber 11' weist weiterhin an der rückwärtigen, dem Betrachter in Fig. 13 zugewandten Seite mehrere Flächenabschnitte 11.3' bis 11.6' auf.

Der erste Flächenabschnitt 11.3' verläuft parallel zur Hubrichtung und ist bei geschlossenem Formwerkzeug parallel zu einer Tasche im Formunterteil 20', in welche das Führungsteil 12' einsetzbar ist. Der sich anschließende Flächenabschnitt 11.4' springt gegenüber der Fläche 11.3' leicht schräg zurück, um die in Fig. 13 gezeigte, nach hinten gekippte Stellung des Hubschiebers 11' zu ermöglichen. In dem oberen Bereich des Hubschiebers, jedoch unterhalb des Kopfbereiches 11.2' ist ein Langloch 14' ausgebildet, in dem ein fest im Führungsteil 12' angeordnetes Bolzenelement, das als Drehachse 13' dient, geführt ist. Gegenüber der ersten Ausführungsform der Erfindung, bei der der Bolzen im Hubschieber angeordnet waren und die außen liegenden Steuerteile das Langloch aufwiesen, ist hier eine umgekehrte Anordnung gewählt.

Das Führungsteil 12' besitzt eine Grundkonfiguration in Form eines länglichen Quaders mit stark abgerundeten Ecken. Die starke Rundung der Ecken dient wiederum dazu, im Formunterteil 30' des Formwerkzeugs eine entsprechende Tasche durch Fräsen einfach herstellen zu können, in welche das Steuerteil passgenau eingeschoben werden kann. Durchgangsbohrungen 12.4' dienen zur Befestigung mit dem Grund der Tasche im Formunterteil.

In einem in Fig. 13 hinteren Bereich 12.3' ist das Steuerteil soweit ausgenommen, dass dort bei geschlossener Entformungsvorrichtung 10' der Keilabschnitt 16.2' des Steuerteils 16' aufgenommen werden kann. Um bei der Rückführbewegung des Formoberteils auf das Formunterteil zu gewährleisten, dass der Hubschieber 11' wieder in seine Ausgangsstellung zurück schwenkt und sich insbesondere bei der Schließbewegung des Werkzeugs wieder in Hubrichtung 6 ausrichtet, ist, wie bei der ersten Ausführungsform auch, ein zusätzliches zweites Steuerteil implementiert, das hier als unterer Fortsatz 11.5', 11.6' des Hubschiebers 11' ausgebildet ist. Dabei ist die untere Fläche 11.6' keilförmig ausgebildet, besitzt also gegenüber der Hubrichtung 6 eine Schrägfläche. Hiermit im Funktionszusammenhang steht ein Bolzenelement 19', das im unteren Bereich des Führungselements 12' eingesetzt ist.

Bei der Öffnungsstellung der Entformungsvorrichtung, die in Fig. 13 gezeigt ist, liegt die Fläche 11.6' an dem Bolzenelement 19' an und verhindert so, dass der Hubschieber mit Niederhalter 18' zu weit nach außen zurückkippt. Setzt nun die Schließbewegung des Werkzeugs ein, so drückt das Steuerteil 16' über den Niederhalter 18' auf den Hubschieber 11' und drückt diesen nach unten. Dabei gleitet die Fläche 11.6' an dem Bolzen 19' ab, bis die Fläche 11.5' erreicht wird. Diese Gleitbewegung der Flächen 11.6', 11.5' am Bolzen 16 bewirkt, dass der Hubschieber 11' wieder in Hubrichtung ausgerichtet ist und der Niederhalter wieder planparallel zur Trennebene ausgerichtet ist.

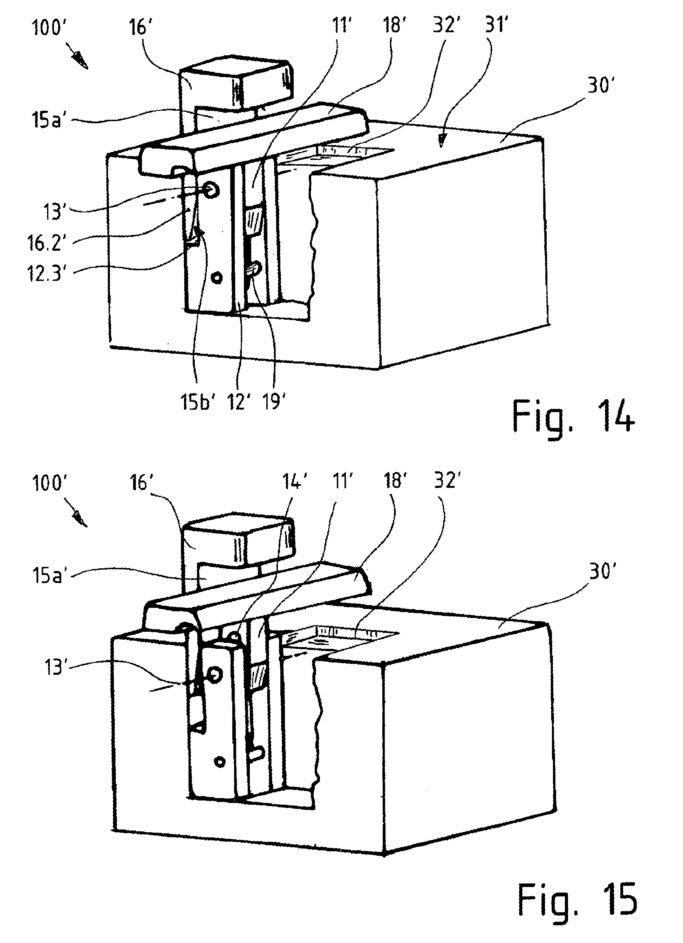

Die Bewegungsfolge bei der zweiten Ausführungsform ist in den Fig. 14 bis 16 festgestellt.

Fig. 14 zeigt den geschlossenen Zustand, wobei jedoch das Formoberteil nicht dargestellt ist. Am Formunterteil 20' ist ein Teilbereich angedeutet, um die Lage des versenkt angeordneten Führungsteils 12' anzudeuten. Der Niederhalter 18' ist planparallel zur Trennebene 31' ausgerichtet. Das Steuerteil 16' ist maximal nach unten geschoben, so dass dessen Keilbereich 16.2' in der Ausnehmung 12.3' des Steuerteils 12 angeordnet aufgenommen ist.

In Fig. 15 hat die Aufwärtsbewegung des Formoberteils bereits begonnen. Auch der Hubschieber 11' mit dem Niederhalter 18' ist durch das hier nicht dargestellte Formteil, das noch im Formoberteil haftet, angehoben worden und zwar soweit, bis beim Hubschieber die Drehachse 13' am unteren Ende des Langlochs 14' liegt. Ab hier ist eine weitere Bewegung des Niederhalters 18' nicht mehr möglich, sodass bei weiterer Aufwärtsbewegung des Formoberteils nun das Werkstück abgestreift wird.

Mit der weiteren Aufwärtsbewegung des Formoberteils wird auch das Steuerteil 16' weiter angehoben. Der Bereich 15b' der Steuerkante liegt nun nicht mehr am Hubschieber 11' an, so dass dieser entsprechend nach außen wegkippen kann.

Bei der zweiten Ausführungsform kann der Niederhalter 18' am Hubschieber 11' in Bezug auf die Drehachse 13' so ausbalanciert, dass ein schwererer Bereich von der Kavität 32' abgewandt ist. Sobald also die Zwangsführung von Hubschieber und Niederhalter durch das Steuerteil 16 aufgehoben ist, kann dieser aufgrund der außen größeren Masse wegkippen, wobei diese Bewegung durch die Fläche 11.6', die in Anlage zum Bolzen 19' kommt, begrenzt ist.
Die schon im Zusammenhang mit der ersten Ausführungsform genannten Betätigungselemente zum Abspreizen sind jedoch genauso einsetzbar.

## Patentansprüche

1. Entformungsvorrichtung (10; 10') zum Entformen eines Werkstücks (4) aus einem Formwerkzeug (100), welches ein Formoberteil (20) und ein Formunterteil (30; 30') umfasst, welche Formteile (20, 30; 30') entlang einer Hubrichtung (6) gegeneinander bewegbar sind,
wobei die Entformungsvorrichtung (10; 10') wenigstens umfasst:
- einen Niederhalter (18; 18'), der im geschlossenen Zustand des Formwerkzeugs (100) wenigstens teilweise zwischen den Formteilen (20, 30; 30') angeordnet ist und sich bis an oder in eine zur Herstellung des Werkstücks (4) vorgesehene Kavität (22; 32') erstreckt, wo er einen Teil einer formgebenden Oberfläche bildet;
- einen Hubschieber (11; 11'), der mit dem Niederhalter (18; 18') verbunden und der mit einem der Formteile (30) über eine Führungseinrichtung formschlüssig gekoppelt ist, wobei der Hubschieber (11; 11') in der Führungseinrichtung schwenkbar gelagert ist und wobei sich bei einer Schwenkbewegung das der Kavität (22; 32') zugewandte Ende des Hubschiebers (11; 11') von dieser weg bewegt,
- ein erstes Steuerteil (16; 16'), das mit dem anderen Formteil (20) verbunden ist , **dadurch gekennzeichnet, dass** der Hobschieber (11, 11') entlang einer durch die Führungseinrichtung begrenzten ersten Wegstrecke w1 entlang der Hubrichtung (6) verschiebbar ist und das erstes Steverteil und das während der ersten Wegstrecke w1 ein Verschwenken des Hubschiebers (11; 11') und/oder des Niederhalters (18; 18') blockiert.

2. Entformungsvorrichtung (10) nach Anspruch 1, **dadurch gekennzeichnet, dass** die Führungseinrichtung wenigstens ein Führungsteil (12) umfasst, das mit der ersten Formhälfte (30) verbunden ist, und das eine Führungsbahn (14) aufweist, in der ein mit dem Hubschieber (11) verbundenes Schiebeelement (13) verschiebbar angeordnet ist.

3. Entformungsvorrichtung (10') nach Anspruch 1, **dadurch gekennzeichnet, dass** die Führungseinrichtung wenigstens ein Führungsteil (12') umfasst, das ein mit dem Hubschieber (11') verbundenes Schiebeelement (13') aufweist, das in einer mit der ersten Formhälfte (30') verbundenen Führungsbahn (14') verschiebbar geführt ist.

4. Entformungsvorrichtung (10; 10') nach Anspruch 2 oder 3, **dadurch gekennzeichnet, dass** die Führungsbahn durch eine langlochförmige Ausnehmung (14; 14') und das Schiebeelement durch ein darin geführtes Bolzenelement gebildet ist.

5. Entformungsvorrichtung (10; 10') nach Anspruch 3, **dadurch gekennzeichnet, dass** das Bolzenelement quer zu Hubrichtung (6) angeordnet ist und die Drehachse (13; 13') bildet, an der der Hubschieber (11; 11') schwenkbar gelagert ist.

6. Entformungsvorrichtung (10; 10') nach einem der Ansprüche 1 bis 5, **gekennzeichnet durch** ein Betätigungselement, das am Hubschieber (11; 11') eine Schwenkbewegung um die Drehachse (13) bewirkt.

7. Entformungsvorrichtung (10; 10') nach Anspruch 6, **dadurch gekennzeichnet, dass** das Betätigungselement benachbart zum Niederhalter (8) zwischen dem Hubschieber (11; 11') und dem Formunterteil (30) angeordnet ist.

8. Entformungsvorrichtung nach Anspruch 6 oder 7, **dadurch gekennzeichnet, dass** das Betätigungselement ein Federelement ist.

9. Entformungsvorrichtung nach Anspruch 6 oder 7, **dadurch gekennzeichnet, dass** das Betätigungselement ein Pneumatikzylinder oder Hydraulikzylinder ist.

10. Entformungsvorrichtung (10; 10') nach einem der Ansprüche 1 bis 9, **dadurch gekennzeichnet, dass** das Steuerelement (16; 16') wenigstens eine Steuerkante (15) aufweist, die zur Anlage an einer Führungsfläche (11.1') an dem Hubschieber (11; 11') und/oder dem Niederhalter (18, 18') vorgesehen ist und die wenigstens zwei Bereiche (15a, 15b) aufweist, wobei sich ein erster, dem Formoberteil (20) zugewandter Bereich (15a) der Steuerkante (15) und eine Führungsfläche (11.1) am Hubschieber (11; 11') im Wesentlichen parallel zur Hubrichtung (6) erstrecken und ein zweiter Bereich (15b;15b') der Steuerkante (15) einen Rücksprung aufweist, wobei der zweite Bereich (15b) der Steuerkante (15) den Hubschieber (11; 11') und/oder ein Ende des Niederhalters (18; 18') beim Schließen des Formwerkzeugs (100) kontaktiert und eine Drehbewegung des Hubschiebers (11; 11') um die Drehachse (13) in Richtung des Formunterteils (30) verursacht.

11. Entformungsvorrichtung (10; 10') nach Anspruch 10, **dadurch gekennzeichnet, dass** der zweite Bereich (15b; 15b') der Steuerkante (15) schräg oder bogenförmig ausgebildet ist.

12. Entformungsvorrichtung (10) nach einem der vorhergehenden Ansprüche, **dadurch gekennzeichnet, dass** im Formoberteil (20) eine Ausnehmung (23) zur Aufnahme eines Abschnitts des Niederhalters (18) vorgesehen ist.

13. Entformungsvorrichtung (10) nach einem der vorhergehenden Ansprüche, **dadurch gekennzeichnet, dass** der Niederhalter (18') in dem dem Formoberteil (20) zugewandten Bereich eine Formschräge aufweist.

14. Entformungsvorrichtung (10) nach einem der vorhergehenden Ansprüche, **dadurch gekennzeichnet, dass** im Bereich unterhalb der Drehachse (13) ein zweites Steuerteil (19) mit dem Formunterteil (30) verbunden ist, welches eine Schräge aufweist, die bei der Schließbewegung des Formwerkzeugs auf einer rückwärtigen unteren Führungsfläche des Hubschiebers (11) abgleitet.

15. Entformungsvorrichtung (10') nach einem der vorhergehenden Ansprüche 1 bis 13, **dadurch gekennzeichnet, dass** im Bereich unterhalb der Drehachse (13) ein zweites Steuerteil angeordnet ist, das als ein sich über die Drehachse (13') hinaus nach unten erstreckender Fortsatz (11.5', 11.6') des Hubschiebers (11') ausgebildet ist, der an einem Stiftelement (19') abgleitet, das in dem mit dem Formunterteil (30') verbundenen Führungsteil (12') quer zur Hubrichtung (6) angeordnet ist.

## Claims

1. A mould-release apparatus (10; 10') for releasing a workpiece (4) from a moulding tool (100) which comprises an upper mould part (20) and a lower mould part (30; 30'), which mould parts (20, 30; 30') are capable of being moved towards each other along a lifting direction (6), wherein the mould-release apparatus (10; 10') comprises at least:
- one holding-down means (18; 18') which in the closed state of the moulding tool (100) is arranged at least in part between the mould parts (20, 30; 30') and extends as far as or into a cavity (22; 32') provided for producing the workpiece (4), where it forms part of a shaping surface;
- a lifting slide (11; 11') which is connected to the holding-down means (18; 18') and which is coupled to one of the mould parts (30) in a positively locking manner by way of a guide device, wherein the lifting slide (11; 11') is mounted so as to be pivotable in the guide device, and wherein the end of the lifting slide (11; 11') facing the cavity (22; 32') is moved away therefrom during a pivoting movement,
- a first control part (16; 16') which is connected to the other mould part (20), **characterized in that** the lifting slide (11, 11') is displaceable along the lifting direction (6) along a first path stretch w1 bounded by the guide device, and the first control part blocks a pivoting of the lifting slide (11; 11') and/or the holding-down means (18; 18') during the first path stretch w1.

2. A mould-release apparatus (10) according to claim 1, **characterized in that** the guide device comprises at least one guide part (12) which is connected to the first mould half (30) and which has a guide path (14) in which a slide element (13) connected to the lifting slide (11) is arranged in a displaceable manner.

3. A mould-release apparatus (10') according to claim 1, **characterized in that** the guide device comprises at least one guide part (12') which has a slide element (13') which is connected to the lifting slide (11') and which is guided in a displaceable manner in a guide path (14') connected to the first mould half (30').

4. A mould-release apparatus (10; 10') according to claim 2 or 3, **characterized in that** the guide path is formed by a recess (14; 14') in the form of an elongate hole and the slide element by a pin element guided therein.

5. A mould-release apparatus (10; 10') according to claim 3, **characterized in that** the pin element is arranged transversely to the lifting direction (6) and forms the rotational shaft (13; 13') on which the lifting slide (11; 11') is mounted so as to be capable of pivoting.

6. A mould-release apparatus (10; 10') according to any one of claims 1 to 5, **characterized by** an actuating element which results in a pivoting movement on the lifting slide (11; 11') about the rotational shaft (13).

7. A mould-release apparatus (10; 10') according to claim 6, **characterized in that** the actuating element is arranged adjacent to the holding-down means (8) between the lifting slide (11; 11') and the lower mould part (30).

8. A mould-release apparatus according to claim 6 or 7, **characterized in that** the actuating element is a spring element.

9. A mould-release apparatus according to claim 6 or 7, **characterized in that** the actuating element is a pneumatic cylinder or hydraulic cylinder.

10. A mould-release apparatus (10; 10') according to any one of claims 1 to 9, **characterized in that** the control element (16; 16') has at least one control edge (15) which is provided for abutment against a guide face (11.1') on the lifting slide (11; 11') and/or the holding-down means (18; 18') and which has at least two regions (15a, 15b), wherein a first region (15a) of the control edge (15) facing the upper mould part (20) and a guide face (11.1) on the lifting slide (11; 11') extend substantially parallel to the lifting direction (6) and a second region (15b; 15b') of the control edge (15) has a setback, wherein the second region (15b) of the control edge (15) contacts the lifting slide (11; 11') and/or one end of the holding-down means (18; 18') when the moulding tool (100) is closed and it results in a rotational movement of the lifting slide (11; 11') about the rotational shaft (13) in the direction of the lower mould part (30).

11. A mould-release apparatus (10; 10') according to claim 10, **characterized in that** the second region (15b; 15b') of the control edge (15) is made sloping or curved.

12. A mould-release apparatus (10) according to any one of the preceding claims, **characterized in that** a recess (23) for receiving a portion of the holding-down means (18) is provided in the upper mould part (20).

13. A mould-release apparatus (10) according to any one of the preceding claims, **characterized in that** the holding-down means (18') has a moulded slope in the region facing the upper mould part (20).

14. A mould-release apparatus (10) according to any one of the preceding claims, **characterized in that** in the region below the rotational shaft (13) a second control part (19) is connected to the lower mould part (30) which has a slope which during the closure movement of the moulding tool slides on a lower guide face of the lifting slide (11) towards the rear.

15. A mould-release apparatus (10') according to any one of the preceding claims 1 to 13, **characterized in that** in the region below the rotational shaft (13) a second control part is provided which is designed in the form of an extension (11.5', 11.6') of the lifting slide (11') which extends downwards beyond the rotational shaft (13') and which slides on a pin element (19') which is arranged transversely to the lifting direction (6) in the guide part (12') connected to the lower mould part (30').

## Revendications

1. Dispositif de démoulage (10 ; 10') destiné au démoulage d'une pièce (4) hors d'un outil de moulage (100) qui comporte une partie supérieure de moule (20) et un partie inférieure de moule (30 ; 30'), lesquelles parties de moule (20, 30 ; 30') peuvent être déplacées l'une contre l'autre le long d'un sens de levage (6), sachant que le dispositif de démoulage (10 ; 10') comporte au moins :
- un serre-flan (18 ; 18') disposé à l'état fermé de l'outil de moulage (100) au moins en partie entre les parties de moule (20, 30 ; 30') et s'étendant jusque sur ou dans une cavité (22 ; 32') prévue pour la fabrication de la pièce (4), où il forme une partie d'une surface de façonnage ;
- un coulisseau de levage (11 ; 11') relié au serre-flan (18 ; 18') et couplé positivement à l'une des parties de moule (30) par un dispositif de guidage, sachant que le coulisseau de levage (11 ; 11') est logé de manière à pouvoir pivoter dans le dispositif de guidage et sachant que lors d'un mouvement de pivotement, l'extrémité, tournée vers la cavité (22 ; 32'), du coulisseau de levage (11 ; 11') se déplace loin de celle-ci,
- une première partie de commande (16 ; 16') reliée à l'autre partie de moule (20), **caractérisé en ce que** le coulisseau de levage (11, 11') peut être déplacé le long d'un premier parcours w1 délimité par le dispositif de guidage le long du sens de levage (6) et **en ce que** la première partie de commande bloque un pivotement du coulisseau de levage (11 ; 11') et/ou du serre-flan (18 ; 18') pendant le premier parcours w1.

2. Dispositif de démoulage (10) selon la revendication 1, **caractérisé en ce que** le dispositif de guidage comporte au moins une partie de guidage (12) reliée à la première moitié de moule (30) et présentant une voie de guidage (14), dans laquelle un élément coulissant (13) relié au coulisseau de levage (11) est disposé de manière mobile.

3. Dispositif de démoulage (10') selon la revendication 1, **caractérisé en ce que** le dispositif de guidage comporte au moins une partie de guidage (12') présentant un élément coulissant (13') relié au coulisseau de levage (11') et guidé de manière mobile dans une voie de guidage (14') reliée à la première moitié de moule (30').

4. Dispositif de démoulage (10 ; 10') selon la revendication 2 ou 3, **caractérisé en ce que** la voie de guidage est formée par un évidement (14 ; 14') en forme de trou oblong et **en ce que** l'élément coulissant est formé par un élément de boulon guidé dedans.

5. Dispositif de démoulage (10 ; 10') selon la revendication 3, **caractérisé en ce que** l'élément de boulon est disposé transversalement au sens de levage (6) et forme l'axe de rotation (13 ; 13'), sur lequel le coulisseau de levage (11 ; 11') est logé de manière à pouvoir pivoter.

6. Dispositif de démoulage (10 ; 10') selon l'une quelconque des revendications 1 à 5, **caractérisé par** un élément d'actionnement qui provoque sur le coulisseau de levage (11 ; 11') un mouvement de pivotement autour de l'axe de rotation (13).

7. Dispositif de démoulage (10 ; 10') selon la revendication 6, **caractérisé en ce que** l'élément d'actionnement est disposé de manière contigüe au serre-flan (8) entre le coulisseau de levage (11 ; 11') et la partie inférieure de moule (30).

8. Dispositif de démoulage selon la revendication 6 ou 7, **caractérisé en ce que** l'élément d'actionnement est un élément de ressort.

9. Dispositif de démoulage selon la revendication 6 ou 7, **caractérisé en ce que** l'élément d'actionnement est un vérin pneumatique ou hydraulique.

10. Dispositif de démoulage (10 ; 10') selon l'une quelconque des revendications 1 à 9, **caractérisé en ce que** l'élément de commande (16 ; 16') présente au moins une arête de commande (15) qui est prévue pour l'appui sur une surface de guidage (11.1') sur le coulisseau de levage (11 ; 11') et/ou le serre-flan (18, 18') et qui présente au moins deux zones (15a, 15b), sachant qu'une première zone (15a) tournée vers la partie supérieure de moule (20) de l'arête de commande (15) et une surface de guidage (11.1) sur le coulisseau de levage (11 ; 11') s'étendent sensiblement parallèlement au sens de levage (6) et une seconde zone (15b ; 15b') de l'arête de commande (15) présente un retrait, sachant que la seconde zone (15b) de l'arête de commande (15) touche le coulisseau de levage (11 ; 11') et/ou une extrémité du serre-flan (18 ; 18') lors de la fermeture de l'outil de moulage (100) et entraîne un mouvement de rotation du coulisseau de levage (11 ; 11') autour de l'axe de rotation (13) en direction de la partie inférieure de moule (30).

11. Dispositif de démoulage (10 ; 10') selon la revendication 10, **caractérisé en ce que** la seconde zone (15b ; 15b') de l'arête de commande (15) est réalisée en biais ou en forme d'arc.

12. Dispositif de démoulage (10) selon l'une quelconque des revendications précédentes, **caractérisé en ce qu'**un évidement (23) est prévu dans la partie supérieure de moule (20) pour la réception d'une section du serre-flan (18).

13. Dispositif de démoulage (10) selon l'une quelconque des revendications précédentes, **caractérisé en ce que** le serre-flan (18') présente une dépouille dans la zone tournée vers la partie supérieure de moule (20).

14. Dispositif de démoulage (10) selon l'une quelconque des revendications précédentes, **caractérisé en ce que** dans la zone au-dessous de l'axe de rotation (13), une seconde partie de commande (19) est reliée à la partie inférieure de moule (30) présentant un biais qui glisse lors du mouvement de fermeture de l'outil de moulage sur une surface de guidage inférieure arrière du coulisseau de levage (11).

15. Dispositif de démoulage (10') selon l'une quelconque des revendications 1 à 13, **caractérisé en ce que** dans la zone au-dessous de l'axe de rotation (13) est disposée une seconde partie de commande réalisée comme un prolongement (11.5', 11.6'), s'étendant au-delà de l'axe de rotation (13') vers le bas, du coulisseau de levage (11'), lequel glisse sur un élément de goupille (19') qui est disposé dans la partie de guidage (12') reliée à la partie inférieure de moule (30') transversalement au sens de levage (6).
